# EUROPEAN PATENT APPLICATION

(11) **EP 2 610 006 A1**
(43) Date of publication of application: **03.07.2013**
(21) Application number: 12199438.8
(22) Date of filing: 27.12.2012
(51) Int. Cl.: B01J 35/00, B01J 35/10, B01J 37/00

(54) **Photocatalyst powder and production method thereof**

(30) Priority: 29.12.2011 KR 20110145608
(71) Applicant: Samsung Electronics Co., Ltd, Gyeonggi-do 443-742 (KR)
(72) Inventor: KIM, Jee Yong, Gyeonggi-do (KR); PARK, Rae Eun, Gyeonggi-do (KR)
(74) Representative: Grünecker, Kinkeldey, Stockmair & Schwanhäusser

(57) **Abstract**

Disclosed herein are photocatalyst powder and a production method thereof, and by having photocatalyst particles combinded without reduction of a specific surface area, the reduction of the specific surface area is nearly none while the pores are developed, as well as the absorption rate with respect to light is superior, the method of producing photocatalyst powder includes forming initial photocatalyst powder by molding nanoparticles of photocatalyst substance into a certain shape through extrusion, and splitting the initial photocatalyst powder into a plurality of photocatalyst powder by injecting the initial photocatalyst powder into a predetermined splitting solution, the initial photocatalyst powder being split into the plurality of photocatalyst powder by the predetermined tspliting solution.

## Description

### BACKGROUND

### 1, Field

Embodiments of the present disclosure relate to photocatalyst powder having superior reaction efficiency, and a production method thereof.

### 2. Description of the Related Art

A photocatalyst is referred to any substance that generates a catalysis action by absorbing light, for example, titanium dioxide (TiO2), zinc oxide (ZnO), and cadmium sulfide (CdS) are included as typical photocatalytic-activity substance, The photocatalyst itself is not changed by light, However, since the photocatalyst takes on a strong oxidizing power on the surface thereof, the photocatalyst is capable of decomposing harmful substance such as an organic compound or bacteria.

The main functions of the photocatalyst include the function to eliminate environmental pollution substance such as nitrogen oxide (NOx) or sulfur oxygen compound (SOx) in the atmosphere, the antibacterial and sterilizing function to decompose the bacteria that is in contact, with the photocatalyst, the air purifying and smell eliminating function to decompose ammonia or formaldehyde, and the water purifying function to decompose the organic chloride compound, which is a polluting substance in water.

A photocatalyst substance is provided with a shape of powder having fine particles. The photocatalyst is than processed in the shape of a cluster by being combinded with the additional substance such as a supporter or a binder. However, when the particles of the photocatalyst is combinded with a binder, the reduction of a specific surface area, the diffused reflection of the light by the binder, and the reduction of the distribution of pores are occurred, and thereby the efficiency of the photocatalyst may be reduced as a result.

### SUMMARY

Therefore, it is an aspect to provide photocatalyst powder, capable of providing a photocatalyst that has no reduction in a specific surface area, the improved pores, and the superior adsorption rate of light, by binding photocatalyst particles without using binder, and a production method thereof.

Additional aspects will be set forth in part in the description which follows and, in part, will be obvious from the description, or may be learned by practice of the disclosure.

In accordance with one aspect, a method of producing photocatalyst powder is as follows. An initial photocatalyst powder may be formed by molding nanoparticles of photocatalyst substance into a certain shape through extrusion. The initial photocatalyst powder may be split into a plurality of photocatalyst powder by injecting the initial photocatalyst powder into a predetermined spliting solution, the initial photocatalyst powder being split into the plurality of photocatalyst powder by the predetermined spliting solution.

The method may further include calcining the split photocatalyst powder at a predetermined temperature and at a predetermined pressure. The method may further include sintering the calcinated photocatalyst powder at a predetermined temperature and at a predetermined pressure.

The predetermined spliting solution may be amorphous solution or colloidal solution.

The predetermined spliting solution may be amorphous solution having same substance as the photocatalyst substance.

The photocatalyst substance may be at least one selected from the group consisting of titanium dioxide (TiO2), zinc oxide (ZnO), cadmium sulfide (CdS), barium titanate (BaTiO3), zirconium dioxide(ZrO2), tungsten oxide(WO3), potassium niobate crystal(KNbO3), and strontium titanate (SrTiO3).

In the molding of nanoparticles of photocatalyst substance through extrusion, a binder substance may be added to the nanoparticles of photocatalyst substance.

The predetermined spliting solution may be a doping solution having doping substance of a cation or an anion.

In accordance with another aspect, photocatalyst powder having nanoparticles of photocatalyst substance clustered is characterized as follows. The photocatalyst substance may be at least one selected from the group consisting of titanium dioxide (TiO2), zinc oxide (ZnO), cadmium sulfide (CdS), barium titanate (BaTiO3), zirconium dioxide(ZrO2), tungsten oxide(WO3), potassium niobate crystal(KNbO3), and strontium titanate (SrTiO3). The nanoparticles of photocatalyst substance may be clustered by a cohesiveness thereof.

The photocatalyst powder may include a powder having particles of binder substance clustered at an inside of the photocatalyst powder.

The photocatalyst powder may be doped with a cation or an anion.

The photocatalyst powder may be provided with a barrier formed at a surface thereof by same substance as the photocatalyst substance.

In accordance with another aspect, an initial photocatalyst powder may be formed by molding nanoparticles of photocatalyst substance into a certain shape through extrusion molding. The initial photocatalyst powder may be injected into a predetermined spliting solution.

The predetermined spliting solution may be amorphous solution or colloidal solution.

The predetermined spliting solution may be amorphous solution having same substance as the photocatalyst substance.

The photocatalyst substance may be at least one selected from the group consisting of titanium dioxide (TiO2), zinc oxide (ZnO), cadmium sulfide (CdS), barium titanate (BaTiO3), zirconium dioxide(ZrO2), tungsten oxide(WO3), potassium niobate crystal(KNbO3), and strontium titanate (SrTiO3).

As described above, photocatalyst powder and the production method thereof have photocatalyst particles binded without reduction of a specific surface area, so that the efficiency reduction of the photocatalyst may be prevented, while the adsorption performance of pollution substance is enhanced as the distribution of pores is varied, and while the induction of photoreaction may be possible to an inside the photocatalyst as the diffusion of light is reduced by non-use of binder.

Thus, by fixing photocatalyst particles, the scattering phenomenon is prevented, while maintaining the superior performance of photocatalyst.

### BRIEF DESCRIPTION OF THE DRAWINGS

These and/or other aspects will become apparent and more readily appreciated from the following description of the embodiments, taken in conjunction with the accompanying drawings of which:
FIG. 1 is a picture illustrating a surface of photocatalyst powder having titanium dioxide (TiO2) particles being combinded by binder measured by a SEM.
FIGS. 2A and 2B show a graph and an analysis table analyzing the surface component of the photocatalyst powder illustrated on FIG. 1.
FIG. 3 shows a specific surface area graph of photocatalyst powder being combinded by binder.
FIG. 4 is an adsorption/desorption graph of photocatalyst powder being combinded by binder.
FIG. 5 is a distribution of pores of photocatalyst powder being combinded by binder.
FIG. 6 is a flow chart of a production method of photocatalyst powder in accordance with one embodiment.
Fig. 7 is a drawing schematically showing each stage of the flow chart illustrated on FIG. 6.
FIG. 8 is a view showing a change of a band gap in a case of using a cation as doping substance.
FIG. 9 is a view showing a change of a band gap in a case of using an anion as doping substance.
FIG. 10A is a view showing one photocatalyst powder in accordance with one embodiment, that is, a photocatalyst mega cluster, photographed by using an SEM.
FIG. 10B is a drawing showing a surface of one photocatalyst powder, in accordance with one embodiment, enlarged and photographed.
FIGS. 11A and 11B show an analysis result of the surface component of photocatalyst powder in accordance with one embodiment.
FIG. 12A is a graph analyzing the size of photocatalyst powder in accordance with one embodiment, and FIG. 12B is a drawing showing the distribution of the shape of photocatalyst powder in accordance with one embodiment.
FIG. 13 is a graph showing a specific surface area of photocatalyst powder in accordance with one embodiment.
FIG. 14 is a graph showing the absorption/desorption characteristics of nitrogen by photocatalyst powderin accordance with one embodiment.
FIG. 15 is a graph showing the distribution of pores of photocatalyst powder in accordance with one embodiment.
FIG. 16 is a graph comparing the ultraviolet ray absorption rate of photocatalyst powder in accordance with one embodiment with the ultraviolet ray absorption rate of a conventional photocatalyst powder combinded by binder.
FIG. 17 is a table comparing the performance of eliminating pollution substance by photocatalyst powder that is not provided with binder for use in accordance with one embodiment with the performance of eliminating pollution substance by a conventional photocatalyst powder combined using binder.

### DETAILED DESCRIPTION

Reference will now be made in detail to the embodiments, examples of which are illustrated in the accompanying drawings, wherein like reference numerals refer to like elements throughout.

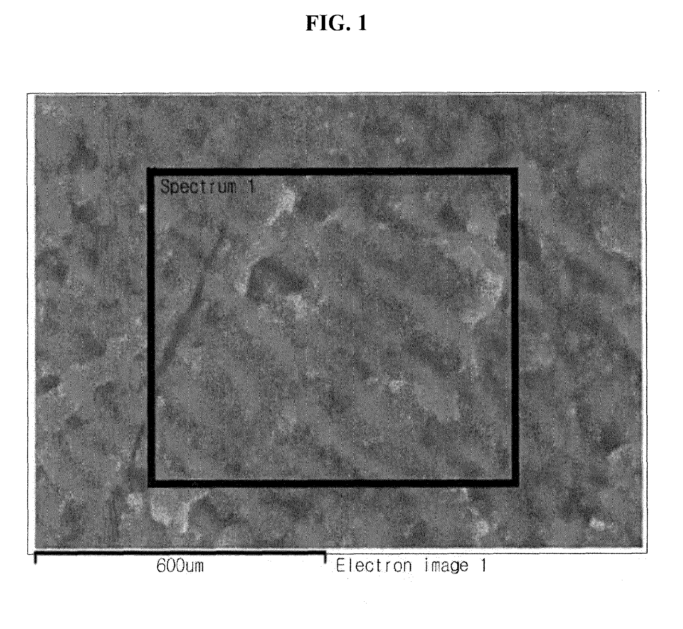

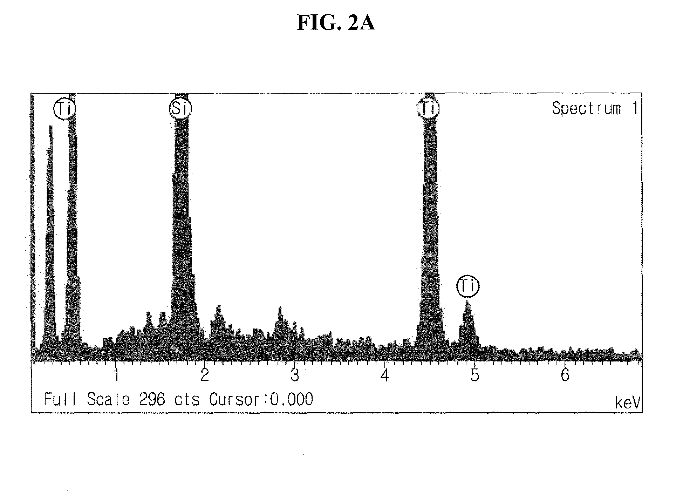

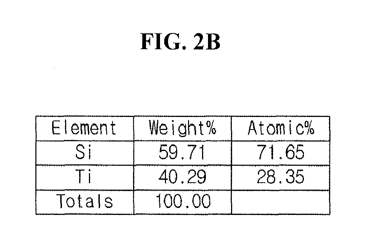

FIG. 1 is a picture illustrating a surface of photocatalyst powder having titanium dioxide (TiO2) particles being combinded by binder measured by a SEM., and FIGS. 2A and 2B show a graph and an analysis table analyzing the surface component of the photocatalyst powder illustrated on FIG. 1.

While the particles of titanium dioxide are nanoparticles each having a diameter in nm units, the silicon Si that is being used as binder is provided with a larger diameter that the particles of tintanium dioxide. The photocatalyst powder having the particles of titanium dioxide and the silicon combinded to each other, as illustrated on FIG. 1, the silicon is positioned in between the particles of titanium dioxide while taking a large area, and thus the pores are not evenly distributed and the roughness is not shown clearly. Thus, the photocatalyst powder being comibined by binder is provided with lower porosity and with insufficient roughness, and as a result, the lower reactivity according to the reduction of the specific surface area is shown.

FIG. 2A is a graph analyzing the surface component of the photocatalyst powder combined by binder. FIG. 2B is a table summering the analysis graph. As illustrated on FIGS. 2A and 2B, when analyzed the surface component of the photocatalyst powder having the silicon binder and the titanium dioxide particle combined, the silicon particle is about 59.71 weight% and the titanium dioxide particle is about 40.29 weight%, while the silicon particle is about 71.65 atomic%, and the titanium dioxide particle is about 28.35 atomic%.

According to the analysis result of FIGS. 2A and 2B, the photocatalyst powder being combinded by binder is provided with the surface thereof having composed of the binder particles instead of photocatalyst particles, and as light is radiated on the photocatalyst powder as such, the diffusion of the light is induced, and the light radiation to an inside the photocatalyst layer may not occur.

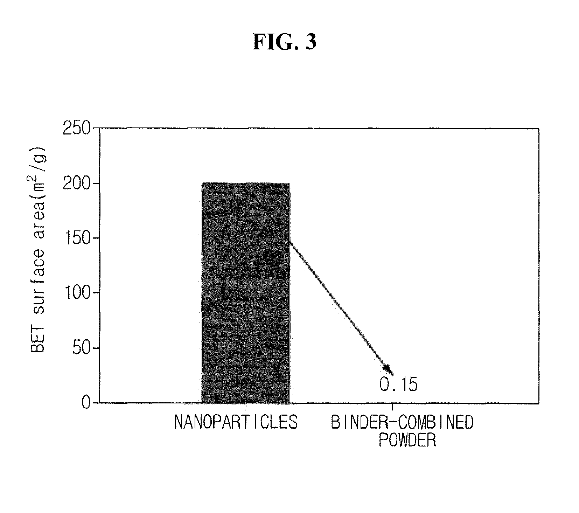

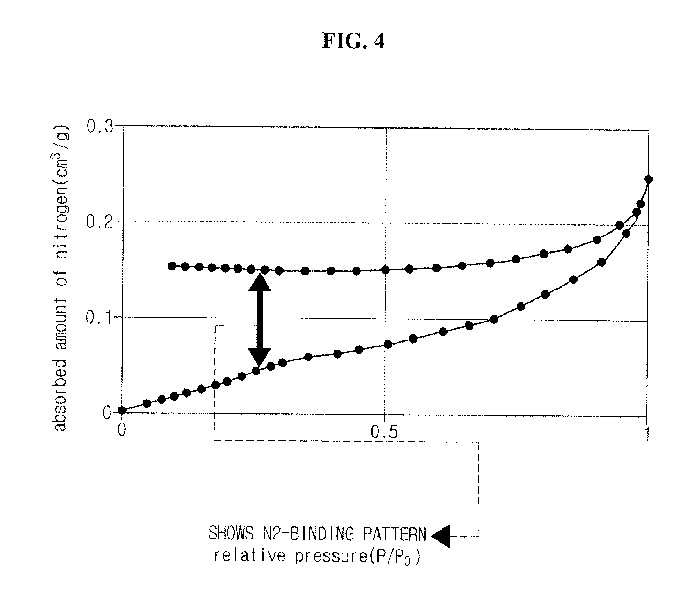

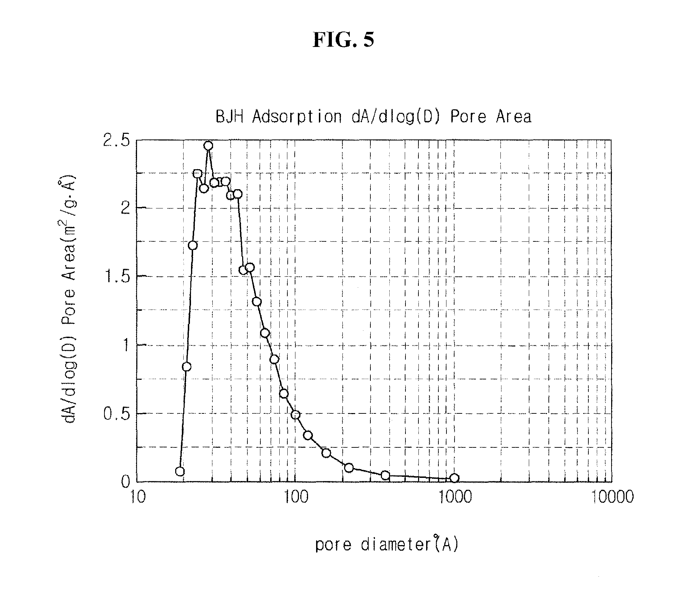

FIG. 3 shows a specific surface area graph of photocatalyst powder being combinded by binder. FIG. 4 is an adsorption/desorption graph of photocatalyst powder being combinded by binder. FIG. 5 is a distribution of pores of photocatalyst powder being combinded by binder.

As illustrated on FIG. 3, while the nanoparticle of the photocatalyst is provided with the high specific surface area of about 200m2/g, the photocatalyst powder being combinded by binder is provided with the low specific surface area of about 0.15 m2/g. That is, when the nanoparticles of the photocatalyst are combinded by binder, the rapid reduction of the specific surface area is occurred. The result as such is same as described earlier on FIGS. 1 and 2. The decomposition or the elimination of the pollution substance of the photocatalyst are taken place when the pollution substance is in contact with the surface of the photocatalyst, and thus the reduction of the specific surface area brings the efficiency reduction of the photocatalyst.

The upper curve on the graph of FIG. 4 represents the desorption characteristic of the nitrogen (N2) by the photocatalyst powder being combinded by binder, and the lower curve on the graph of FIG. 4 represents the adsorption characteristic of the nitrogen (N2) by the photocatalyst powder being combinded by binder.

Referring to FIG. 4, the photocatalyst powder being combinded by binder indicates a binding pattern of the nitrogen, as the nitrogen being adsorbed is not completely desorbed. Thus, after the nitrogen, which is pollution substance in the atmosphere, is adsorbed at the photocatalyst powder, some of the nitrogen being adsorbed remains in the photocatalyst powder, and the some of the nitrogen remaining in the photocatalyst powder may bring the efficiency reduction of the photocatalyst.

Referring to FIG. 5, the photocatalyst powder being combinded by binder is provided with a limited distribution of pores, and particularly, the pore in the shape of macro/meso-pore is not being developed. As to increase the activation of the photocatalyst powder, an even pore distribution is demanded, and particularly, it is favorable to secure the reaction area by developing the pores of the macro/meso-pore sites. However, the photocatalyst powder being combined by binder, as illustrated on FIG. 5, is not provided with an evenly distributed pore, and thus the efficiency thereof is reduced.

As described on FIGS. 1 to 5, in a case of the photocatalyst nanoparticles are combinded by binder, the diffusion of light, the reduction of specific surface area, the limited distribution of pores, and the unstable adsorption/desorption characteristics of nitrogen may is present, thereby reducing the efficiency of the photocatalyst as a result.

Thus, according to one embodiment, a photocatalyst powder only having the photocatalyst nanoparticles combined without an additional binder is provided. Hereinafter, the characteristics and the production method of the photocatalyst powder in accordance with one embodiment will be described.

The photocatalyst powder in accordance with one embodiment has photocatalyst nanoparticles clustered by the self cohesiveness without an additional binder, and forms a shape of a mega cluster. First, the production method of the photocatalyst powder in accordance with one embodiment of the present disclosure will be described, and the characteristics thereof will be described later.

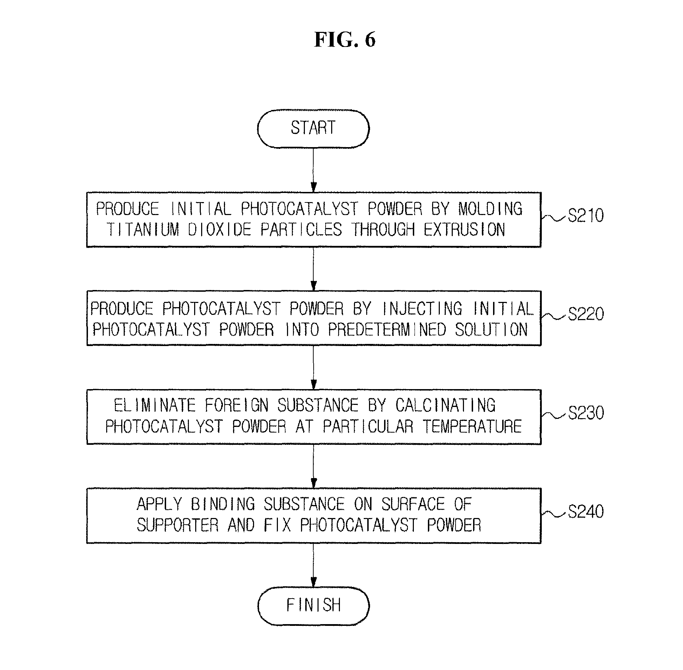

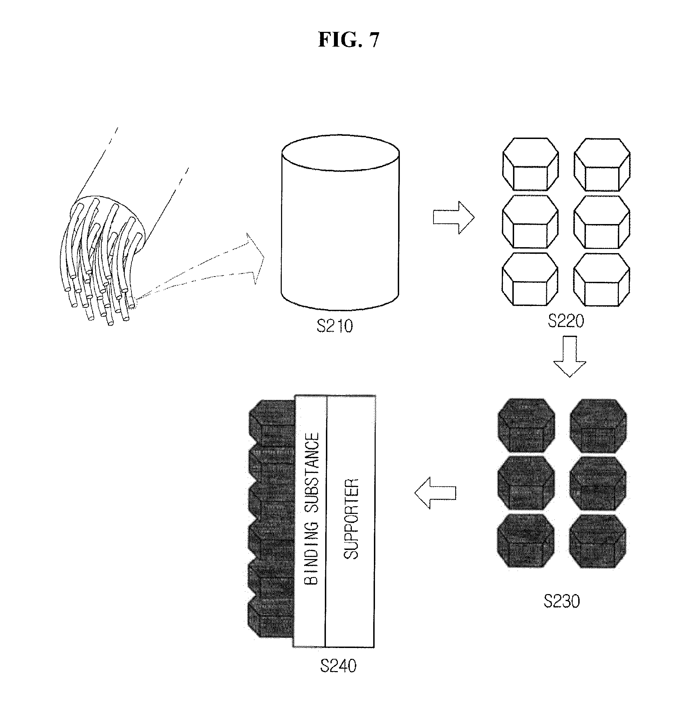

FIG. 6 is a flow chart of a production method of photocatalyst powder in accordance with one embodiment. FIG. 7 is a drawing schematically showing each stage of the flow chart illustrated on FIG. 6.

Referring to FIGS. 6 to 7, first, an initial photocatalyst powder, which is provided with a certain shape thereof by compressing the titanium dioxide particles in nano units at high temperature and high pressure, is produced (210). Here, the initial photocatalyst powder is referred to as powder that is produced by an extrusion molding, prior to going through a splitting process that is to be described later. The production of the initial photocatalyst powder may use an extrusion molding method, that produces an initial photocatalyst power that has a shape of any one of a spherical shape, an elliptical shape, a cylindrical shape, or a rectangular parallelepiped shape. The initial photocatalyst powder is provided with many numbers of titanium dioxide particles clustered without an additional binder, and thus the initial photocatalyst powder is easily crushed, and the delamination of the particles also occurs.

However, adding of a binder substance is possible during the extrusion molding, and if the calcinating process and the sintering process, both of which will be described later, are completed after adding the binder substance at the time of producing the initial photocatalyst powder, a photocatalyst powder is produced in a shape of a mega cluster where a cluster of the binder substance is present at an inside thereof, and the titanium dioxide particles surround the cluster of the binder substance.

Then, the initial photocatalyst powder that is produced is injected into a predetermined splitting solution (220). As the initial photocatalyst powder is injected into the predetermined splitting solution, the solution is infiltrated in between pores of the initial photocatalyst powder combinded in a weak manner, and the initial photocatalyst powder is split into clusters having smaller sizes through expansion. Accordingly, the initial photocatalyst powder is split into the photocatalyst powder by swelling or bulking, and the splitting solution is swelling solution or bulking solution. The cluster that is split may be referred to as a mega cluster, and the split cluster as such becomes the photocatalyst powder that is completed.

Depending on the type of the splitting solution, the characteristic of the split cluster, that is, the characteristic of the photocatalyst powder is determined. Depending on whether the solution is the amorphous solution or the colloidal solution, the physical properties of the photocatalyst powder is affected, and thus the splitting solution into which the initial photocatalyst powder is to be injected is determined according to the use of the photocatalyst powder.

As one embodiment, in a case when the amorphous substance or the colloidal substance is used as the spilitting solution, a unique barrier is formed at the surroundings of the split cluster. Because of such, the particle delamination of the photocatalyst powder is prevented, and the physical strength of the photocatalyst powder is reinforced. The barrier as such is formed only at the surface of the photocatalyst powder, and thus the barrier does not give an impact on the distribution of the pores, and does not largely reduce the efficiency of the photocatalyst. In addition, as the splitting solution, the solution having visible ray inducing substance such as K, Mn, or Na may be used as to enhance the reactivity of the split photocatalyst powder.

In a case when the amorphous titanium dioxide solution is used as the splitting solution, since the titanium dioxide in the solution forms a barrier at the photocatalyst powder, the titanium dioxide having superior light-penetrating ability does not induce the diffusion of light but rather increases the light absorption rate, and thereby the induction of the light reaction may be possible to an inside the photocatalyst powder. In addition, since the substance forming the barrier and the substance forming the photocatalyst are same titanium dioxide, the difficulty that occurs in a case of combining by an additional binder is not taken place.

In the embodiment, titanium dioxide is used as the photocatalyst substance, but the present disclosure is not limited thereto. The photocatalyst substance being used in the embodiment of the present disclosure may not be limited to any type, and may use zinc oxide (ZnO), cadmium sulfide (CdS), barium titanate (BaTiO3), zirconium dioxide(ZrO2), tungsten oxide(WO3), potassium niobate crystal(KNbO3), or strontium titanate (SrTO3). Thus, if the amorphous solution, which is provided with the same substance as the photocatalyst substance that forms the initial photocatalyst powder, is used to splitting the initial photocatalyst powder into mega clusters, the split photocatalyst powder is provided at the surface thereof with the barrier having the same substance as the split photocatalyst powder, and thus the prevention of the delamination of the particles and the enhancement of the physical strength may be possible, while the difficulty that may occur when being combined by an additional binder may be prevented.

Since the initial photocatalyst powder, which is extrusion-molded, is composed of the titanium dioxide in nm units, the initial photocatalyst powder is provided with pores having A scales and nm scales. The pores as such serve as channels, and in a case when a solution containing a doping substance is used as the predetermined solution being used in the splitting process, the doping solution is passed in between the titanium dioxide nanoparticles through the channels, and the ions that are included in the each doping solution are positioned at the surroundings of the titanium dioxide nanoparticles. That is, the ions are doped at the titanium dioxide powder.

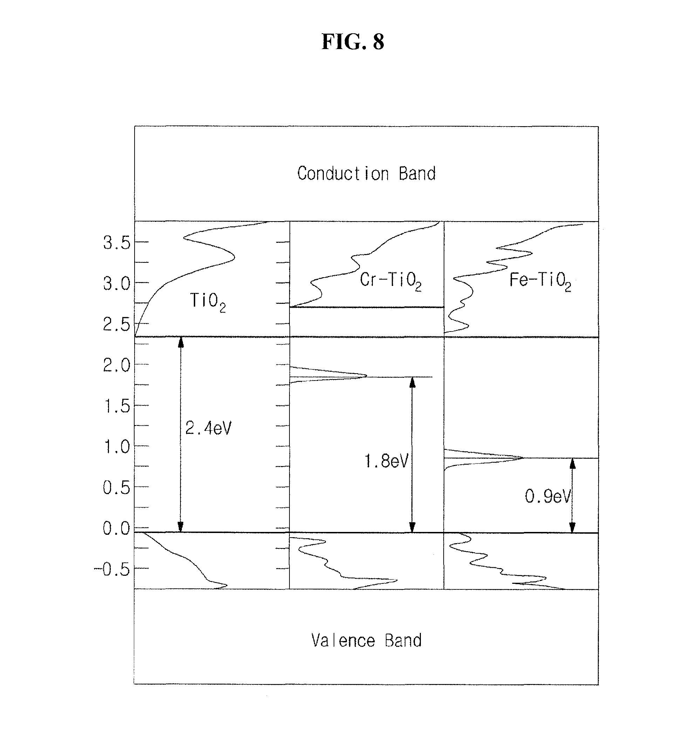

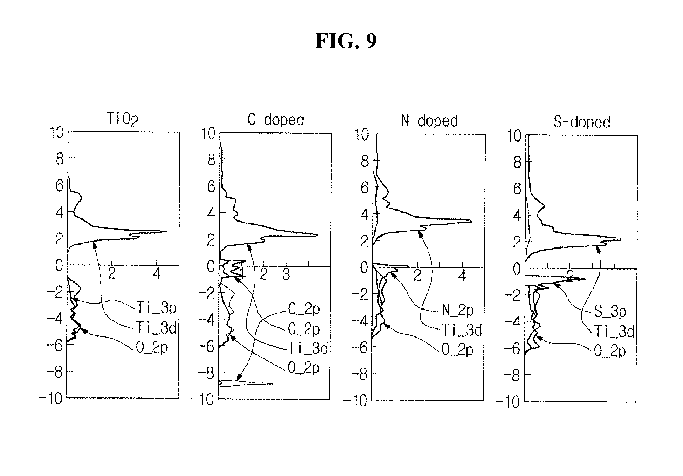

FIG. 8 is a view showing a change of a band gap in a case of using a cation as doping substance. FIG. 9 is a view showing a change of a band gap in a case of using an anion as doping substance.

When the titanium dioxide powder is doped with a cation, particularly with a transition metal cation, the metal ion traps electrons and delays the re-combination of the electron-hole, thereby increasing the activity of reaction.

In detail, in a case of using transition metal cations such as Fe and Cr as doping substance, when Cr substitutes the position of titanium, gap states are generated by the doping effect of the Cr near the conduction band in between the band gaps of the titanium dioxide, and thus the band gap of the titanium dioxide is reduced. In a case when Fe substitutes titanium, the gap states by the doping of the Fe are positioned near the covalence band, and thus the band gap is reduced.

Referring to FIG. 8, in a case when the titanium dioxide is not doped at the anatase phase, the value of the band gap is somewhat large at about 2.4eV, and thus the titanium dioxide reacts only to the ultraviolet ray. However, when a cation such as Cr or Fe is doped, by the d-states of the doped metal ion, the gap states are shown, and the effect of reduced band gap is shown.

In addition, as illustrated on FIG. 9, in a case when anions such as C, N, and S are doped at the titanium dioxide, the effect of the band gap of the titanium dioxide being reduced may be obtained, and because of such, the titanium dioxide that may only absorb the ultraviolet ray may be able to absorb visible light.

In a case when the photocatalyst powder is being used in liquid, the coherence between the inside particles is needed to be strong, but in a case when the photocatalyst powder is being used in air, strong coherence is not demanded. Thus, distilled water may be used as the predetermined solution that is being used at the splitting process of the initial photocatalyst powder. When the initial photocatalyst powder is injected into the distilled water, the distilled water is smeared into an inside structure of the initial photocatalyst powder, and then splits the initial photocatalyst powder into a number of mega clusters, but the barriers are not formed at the surroundings of the mega clusters.

Referring to FIGS. 6 to 7 again, foreign substance is eliminated by calcinating the photocatalyst powder, which is provided in a shape of split mega clusters, at a particular temperature (230). The calcinating temperature may be set at about below 500°C. As one embodiment, the photocatalyst powder is put into a calcinating oven having a temperature between 350°C and 450°C to eliminate foreign substance. At this time, the rising velocity of the temperature is controlled to be at about below 2°C per minute, so that a splitting phenomenon caused by a rapid evaporation of the foreign substance is prevented from occurring.

In addition, since the mechanical strength of the photocatalyst powder may be reinforced by sintering the photocatalyst powder having the calcinating process completed, as one embodiment, the photocatalyst powder may be heated for more than about 30 minutes at the temperature between 600°C and 900°C so that the binding between the power particles may take place, leading to coagulation.

The photocatalyst powder that is completed may be fixed in various methods according to the use of the photocatalyst powder, and as one embodiment, after binding substance is applied on the surface of a filter supporter to fix the photocatalyst powder, the photocatalyst powder having a shape of mega clusters is applied on top of the binding substance to be fixed, so that a photocatalyst filter may be made (240).

As another embodiment of doping ion in the splitting process, a method of injecting the initial photocatalyst powder, which is molded through an extrusion, into a splitting solution containing binder substance and ion-type substance may be considered. The injected photocatalyst powder is split into mega clusters of a predetermined size. The binder substance having relatively larger size is combinded to the surface of the mega cluster and to some of the meso, macro sites, and the ion-type substance having smaller size is doped at the surface of the titanium dioxide particles after being mostly penetrated to the meso,macro,nano sites.

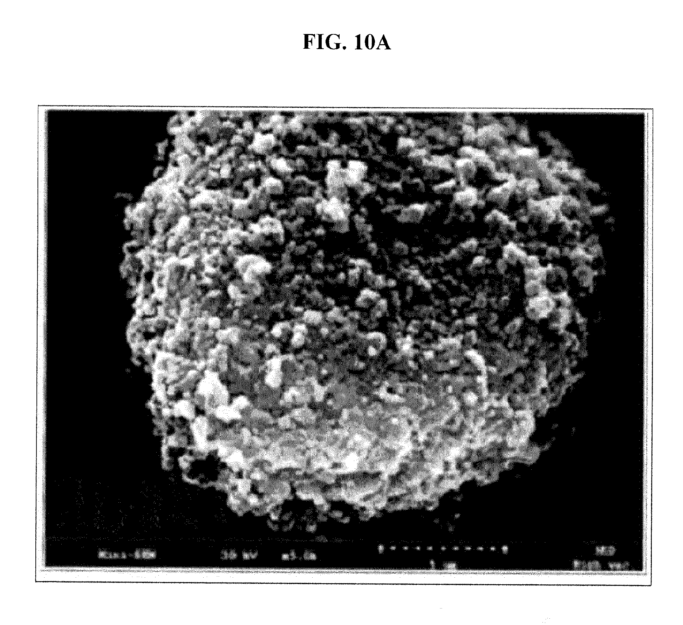

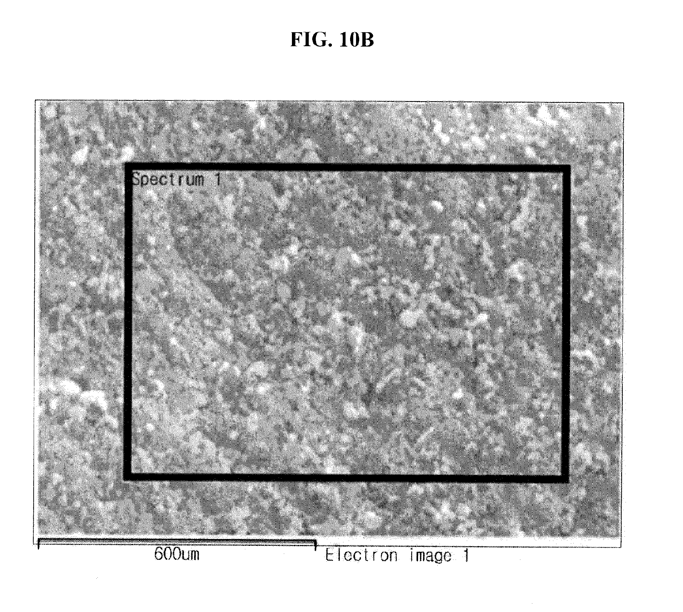

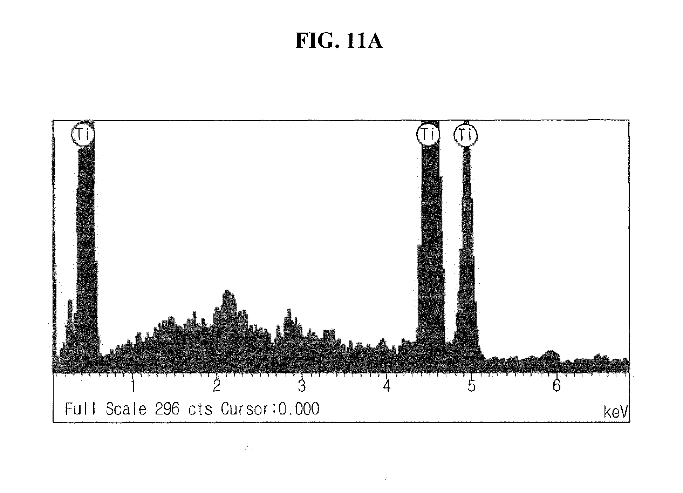

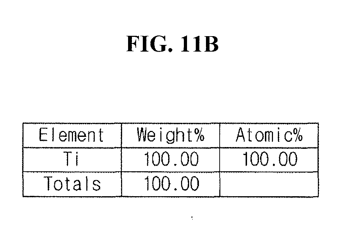

FIGS. 10A and 10B show the photocatalyst powder in accordance with one embodiment measured by SEM. FIGS. 11A and 11B show an analysis result of the surface component of the photocatalyst powder in accordance with one embodiment. In the embodiments of the FIGS. 10 to 11, the titanium dioxide particles are used as the particles of the photocatalyst powder.

FIG. 10A is a view showing one photocatalyst powder in accordance with one embodiment, that is, a photocatalyst mega cluster, photographed by using an SEM. FIG. 10B is a drawing showing a surface of one photocatalyst powder, in accordance with one embodiment, enlarged and photographed.

Referring to FIG. 10A, the photocatalyst powder in accordance with one embodiment may be produced in a shape of a sphere, and the photocatalyst powder having a shape of a sphere is provided with high specific surface area. In addition, by referring to FIG. 10B, the photocatalyst powder in accordance with one embodiment is provided with the titanium dioxide particles distributed on the surface thereof while the titanium dioxide particles are forming pores, and thus the photocatalyst powder in accordance with one embodiment is provided with the roughness on the surface thereof, and as a result, the contact surface to be in contact with pollution substance is increased, thereby enhancing the reactivity thereof.

In addition, by referring to FIG. 11, the surface component of the photocatalyst powder in accordance with one embodiment is composed of only titanium dioxide, and thus the diffusion of light by binder substance such as silicon is not occurred while the light absorption rate is increased.

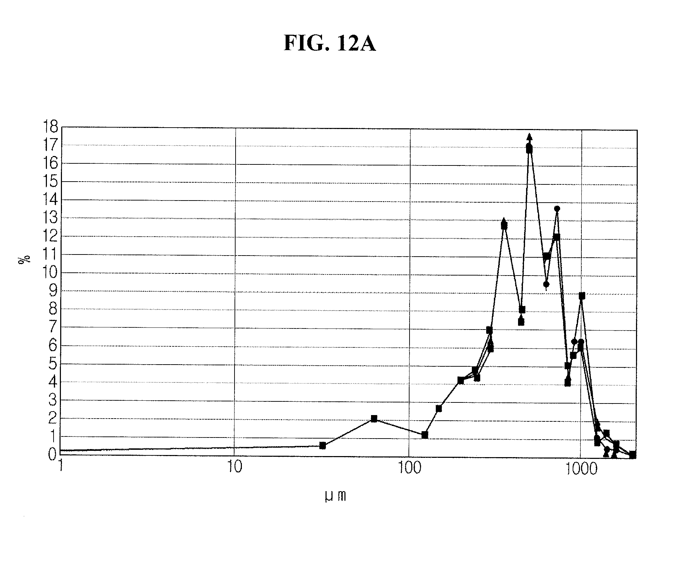

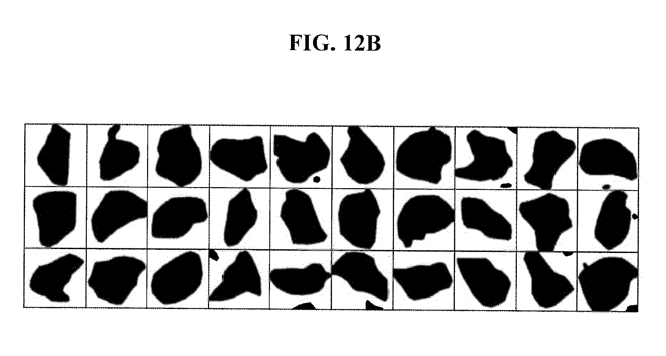

FIG. 12A is a graph analyzing the size of photocatalyst powder in accordance with one embodiment, and FIG. 12B is a drawing showing the distribution of the shape of photocatalyst powder in accordance with one embodiment.

Referring to FIGS. 12A and 12B, the size and the shape of the photocatalyst powder in accordance with one embodiment may greatly vary. That is, the size and the shape of the photocatalyst powder may be controlled according to the intention of a user. Thus, depending on the use of the photocatalyst filter, the photocatalyst powder may be produced while having the size and the shape that are proper to the use of the photocatalyst filter.

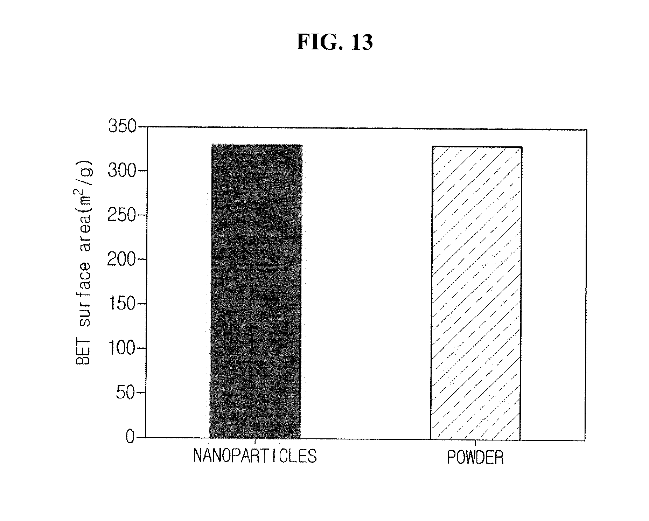

FIG. 13 is a graph showing a specific surface area of photocatalyst powder in accordance with one embodiment.

Referring to FIG. 13, the photocatalyst powder, which is provided with a shape of mega clusters, being combinded without binder substance in accordance with one embodiment is provided with the almost same specific surface area as the titanium dioxide nanoparticles. Thus, the reduction of the specific surface area by the formation of the powder is not occurred, and the reduction of the reaction efficiency may be prevented.

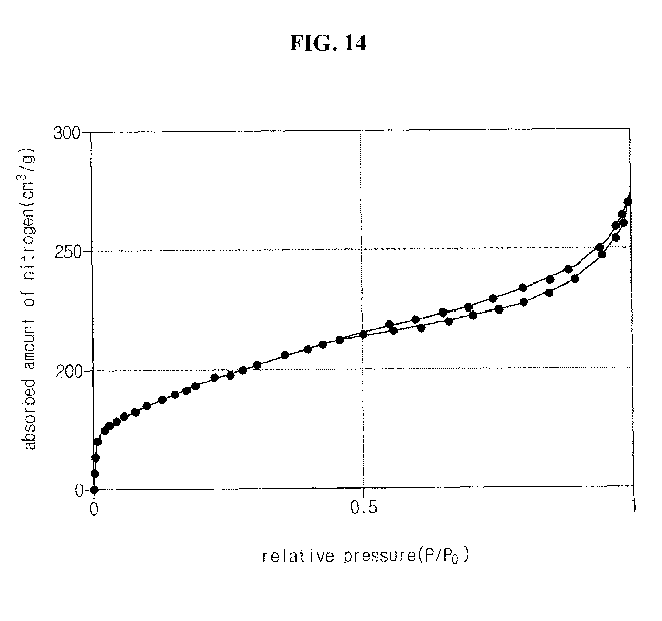

FIG. 14 is a graph showing absorption/desorption characteristics of the nitrogen by photocatalyst powder in accordance with one embodiment.

Referring to FIG. 14, different from the graph on FIG. 4 that is already described, the photocatalyst powder in accordance with one embodiment is provided with the adsorption characteristic of the nitrogen and the desorption characteristic of the nitrogen that are almost in consensus to each other. Thus, the nitrogen that is adsorbed at the photocatalyst filter is entirely desorbed without having any accumulated amount thereof, and thereby the reduction of the reactivity by the accumulation of nitrogen may be prevented.

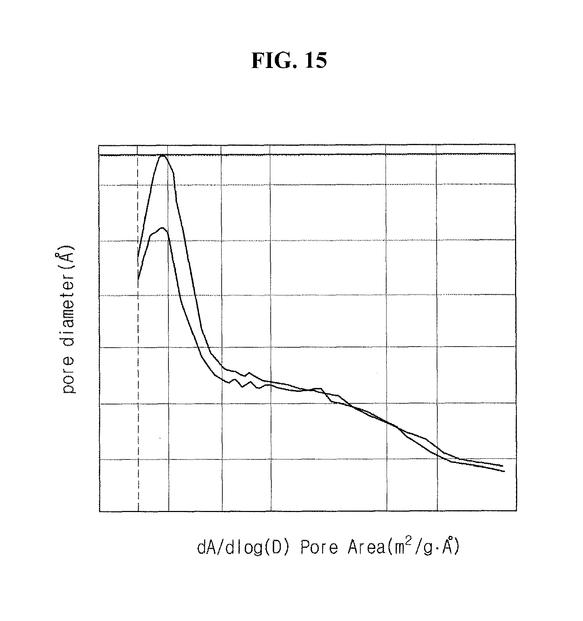

FIG. 15 is a graph showing the distribution of pores of photocatalyst powder in accordance with one embodiment.

On the earlier graph of FIG. 5, the photocatalyst powder that is combined by binder is not provided with the evenly distributed pores, and particularly, the pores at the meso/macro sites are not nearly developed. However, Referring to FIG. 15, the photocatalyst powder in accordance with one embodiment is provided with the pores that are evenly distributed even at the meso/macro sites. Thus, the photocatalyst powder in accordance with one embodiment may evenly react to the pollution substance having various particle sizes.

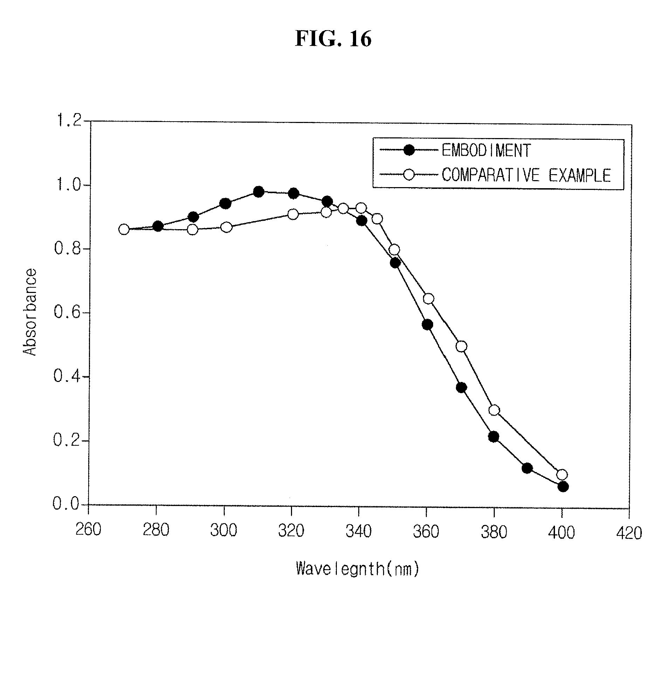

FIG. 16 is a graph comparing the ultraviolet ray absorption rate of photocatalyst powder in accordance with one embodiment with the ultraviolet ray absorption rate of a conventional photocatalyst powder combinded by binder.

Referring to FIG. 16, in the ultraviolet ray range having the wavelength of between 280nm and 340nm, the ultraviolet ray absorption rate of the photocatalyst powder (the embodiment) in accordance with one embodiment is further superior. As illustrated on FIG. 1 which is already been described, with respect to the photocatalyst powder (a comparative example) having binder combinded thereto, the diffusion of light by the binder substance interferes the absorption of light, while with respect to the photocatalyst powder in accordance with one embodiment, particularly, the titanium dioxide powder, is provided with superior light penetration rate, and thereby the absorption of light takes places actively.

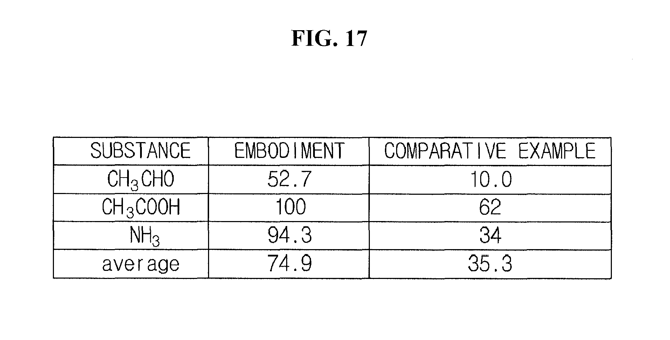

FIG. 17 is a table comparing the performances of eliminating pollution substance by photocatalyst powder that is not provided with binder for use in accordance with one embodiment and by a conventional photocatalyst powder combinded using binder.

Referring to FIG. 17, the photocatalyst powder (the embodiment) in accordance with one embodiment of the present disclosure, by eliminating CH3CHO by about 52.7%, CH3COOH by about 100%, and NH3 by about 94.3%, shows an average performance of eliminating pollution substance at about 74.9%. On the contrary, the photocatalyst powder being combined by binder (the comparative example), by eliminating CH3CHO by about 10.0%, CH3COOH by about 62%, and NH3 by about 34%, shows an average performance of eliminating pollution substance at about 35.3%, and thus it is found that the photocatalyst powder being combinded without the use of binder in accordance with one embodiment is provided with far superior performance.

Although a few embodiments have been shown and described, it would be appreciated by those skilled in the art that changes may be made in these embodiments without departing from the principles and spirit of the disclosure, the scope of which is defined in the claims and their equivalents.

## Claims

1. A method of producing photocatalyst powder, comprising:
forming an initial photocatalyst powder by molding nanoparticles of photocatalyst substance into a certain shape through extrusion; and
splitting the initial photocatalyst powder into a plurality of photocatalyst powder by injecting the initial photocatalyst powder into a predetermined splitting solution, the initial photocatalyst powder being split into the plurality of photocatalyst powder by the predetermined splitting solution.

2. The method of claim 1, further comprising:
calcining the split photocatalyst powder at a predetermined temperature and at a predetermined pressure; and
sintering the calcinated photocatalyst powder at a predetermined temperature and at a predetermined pressure,

3. The method of claim 1, wherein:
the predetermined splitting solution is at least one selected from the group comprising amorphous solution, colloidal solution, distilled water and solution having visible ray inducing substance being at least one selected from the group comprising K, Mn and Na,

4. The method of claim 1, wherein:
the predetermined splitting solution comprises amorphous solution having same substance as the photocatalyst substance,

5. The method of claim 1, wherein:
the photocatalyst substance is at least one selected from the group comprising titanium dioxide (TiO₂), zinc oxide (ZnO), cadmium sulfide (CdS), barium titanate (BaTiO₃), zirconium dioxide(ZrO2), tungsten oxide(WO3), potassium niobate crystal(KNbO3), and strontium titanate (SrTiO₃).

6. The method of claim 1, wherein:
in the molding of nanoparticles of photocatalyst substance through extrusion, a binder substance is added to the nanoparticles of photocatalyst substance.

7. The method of claim 1, wherein:
the predetermined splitting solution is a doping solution having doping substance of a cation or an anion.

8. Photocatalyst powder having nanoparticles of a photocatalyst substance clustered, wherein:
the photocatalyst substance is at least one selected from the group comprising titanium dioxide (TiO₂), zinc oxide (ZnO), cadmium sulfide (CdS), barium titanate (BaTiO₃), zirconium dioxide(ZrO2), tungsten oxide(WO3), potassium niobate crystal(KNbO3), and strontium titanate (SrTiO₃); and
the nanoparticles of photocatalyst substance is clustered by a cohesiveness thereof.

9. The photocatalyst powder of claim 8, wherein:
the photocatalyst powder comprises a powder having particles of binder substance clustered at an inside of the photocatalyst powder.

10. The photocatalyst powder of claim 8, wherein:
the photocatalyst powder is doped with a cation or an anion.

11. The photocatalyst powder of claim 8, wherein:
the photocatalyst powder is provided with a barrier formed at a surface thereof by same substance as the photocatalyst substance.

12. Photocatalyst powder is formed by a method comprising:
forming an initial photocatalyst powder by molding nanoparticles of photocatalyst substance into a certain shape through extrusion molding; and
injecting the initial photocatalyst powder into a predetermined splitting solution.

13. The photocatalyst powder of claim 12, wherein:
the predetermined splitting solution is at least one selected from the group comprising amorphous solution, colloidal solution, distilled water and solution having visible ray inducing substance being at least one selected from the group comprising K, Mn and Na.

14. The photocatalyst powder of claim 12, wherein:
the predetermined splitting solution comprises amorphous solution having same substance as the photocatalyst substance.

15. The photocatalyst powder of claim 12, wherein:
the photocatalyst substance is at least one selected from the group comprising titanium dioxide (TiO₂), zinc oxide (ZnO), cadmium sulfide (CdS), barium titanate (BaTiO₃), zirconium dioxide(ZrO2), tungsten oxide(WO3), potassium niobate crystal(KNbO3), and strontium titanate (SrTiO₃)..
